# EUROPÄISCHE PATENTSCHRIFT

(11) **EP 1 251 367 B1**
(45) Veröffentlichungstag und Bekanntmachung des Hinweises auf die Patenterteilung: **10.11.2004**
(21) Anmeldenummer: 02008527.0
(22) Anmeldetag: 15.04.2002
(51) Int. Cl.: G02B 5/124

(54) **Umlenkspiegelstruktur, bestehend aus einer Vielzahl von Tripeln**
Deflecting mirror, consisting of a multitude of triples
Miroir de déviation, consistant en une multitude de triples

(30) Priorität: 20.04.2001 DE 10119671
(43) Veröffentlichungstag der Anmeldung: 23.10.2002
(73) Patentinhaber: GUBELA, Hans-Erich, Sr., D-77871 Renchen (DE)
(72) Erfinder: GUBELA, Hans-Erich, Sr., D-77871 Renchen (DE)
(74) Vertreter: WOLF & LUTZ

(56) Entgegenhaltungen:
- DE-A- 2 419 629
- DE-A- 4 240 680
- DE-A- 19 727 527
- US-A- 2 682 807
- PATENT ABSTRACTS OF JAPAN vol. 1995, no. 01, 28. Februar 1995 (1995-02-28) -& JP 06 289207 A (NIPPON CARBIDE IND CO INC), 18. Oktober 1994 (1994-10-18)
- PATENT ABSTRACTS OF JAPAN vol. 017, no. 147 (P-1508), 24. März 1993 (1993-03-24) & JP 04 318502 A (KOKURITSU KANKIYOU KENKIYUUSHIYOCHIYOU), 10. November 1992 (1992-11-10)

## Beschreibung

Die Erfindung betrifft eine Umlenkspiegelstruktur, die auf einer Vielzahl von Tripeln basiert.

Ziel dieser Umlenkspiegelstruktur ist es, ein von einem Lichtsender einfallendes Licht zu einem anderen Punkt im Raum zu spiegeln. Dabei soll die winkelgerechte Ausrichtung des Lichtsenders für die Praxis eine Winkeltoleranz zulassen, damit die Montage und Anwendung der Umlenkspiegelstruktur gegenüber der Verwendung eines herkömmlichen Planspiegels oder Umlenkprismas erleichtert wird. Besonders für die mehrfache Umlenkung eines Lichtstrahles oder Lichtstrahlbündels ist diese Umlenkspiegelstruktur wegen ihrer einfachen Handhabung geeignet, denn sie ist besonders einfach für den Strahlengang des umzulenkenden Lichtbündels ausrichtbar.

Die Umlenkspiegelstruktur löst praktische Ausrichtungsprobleme und ermöglicht neue Anwendungen in der Lichtsensorik, in der Lasersensorik, Laserstrahlführung und in der Sicherheitstechnik des Straßenverkehrs zur Lichtumlenkung und zur Strahl- oder Elementarteilchenumlenkung in der Kerntechnik.

Die neuartige Umlenkspiegelstruktur, bestehend aus einer Vielzahl von Tripeln, ermöglicht optischen Sensoren hinter Kanten und Ecken zu schauen, Lichtgitter zu erzeugen, in Engstellen wie Rohren oder Kugellagern Meßaufgaben zu erfüllen, Drehungen und Verwindungen zu beobachten, im Brandschutz Räume auf Feuer oder Rauch zu überwachen. Im Straßenverkehr können retroflektive Strukturen Weitwinkeleigenschaften erhalten durch Hinzufügen von Tripeln der Umlenkspiegelstruktur. Auch die Strahlteilung oder Umlenkung von Elementarteilchen ist ein Aufgabengebiet der Umlenkspiegelstruktur.

Der Stand der Technik
ermöglicht Lichtbündel mittels der Anordnung von Spiegeln oder Prismen umzulenken. Jedoch im praktischen Einsatz bei der Montage an einer Maschine zeigen sich größte Schwierigkeiten, diese Spiegel oder Prismen so anzubringen und schnell auszurichten, dass der gewünschte Strahlverlauf erreicht wird. Nur wer es selbst einmal versucht hat, ein nicht sichtbares Lichtbündel eines Sensors über mehrere Umlenkungen zu führen, weiß wie mühevoll es ist. Denn es bedarf einer langen Übungszeit und Lemphase des menschlichen Gehirns, Winkel und Strahlverläufe richtig einzuschätzen aus der Position des Beobachters, der mit seinen Augen nicht selbst im Strahlengang steht.
Die Schwierigkeiten nehmen aber noch zu, wenn der Maschinenkörper, zum Beispiel eine Förderanlage, vibriert. Ein Laserstrahlbündel tanzt dann durch die Vibration über den Planspiel und der Strahlverlauf über mehrere Umlenkungen verändert sich erheblich. Meist wird dann einer der Zielpunkte nicht mehr erreicht.

Nun gibt es aber bei der Rückstrahlung von Licht ein würfelförmiges, reflektierendes Spiegelsystem, dass in der Messtechnik als Perkin-Elmer-Pyramide bekannt ist und bei Rückstrahlem heute als Fullcube bezeichnet wird. Ein Tripel aus drei quadratischen Spiegeln die zueinander im Rechten Winkel stehen und das Licht zur Lichtquelle retroflektieren. In der GB-PS 269 760 sind Werkzeuge beschrieben, bei dem die Herstellung der würfelförmigen, reflektierenden Flächen durch Verwendung einzelner angeschliffener Stifle oder gekerbter Platten erfolgt.

In der DE 44 10 994 sind Körper und/oder Bauteile beschrieben eines strangförmigen Tripelreflektors und/oder Werkzeugelements zur Abformung von Tripelreflektoren mit Fullcube-Eigenschaften. Diese strangförmigen Bauteile lassen sich besonders einfach auch In der Mikrostrukturtechnik zu Flächen zusammenfügen und sind eine Fertigungstechnik, die auch für die Formkörperherstellung oder Darstellung der erfindungsgemäßen Umlenkspiegelstruktur geeignet ist.

Die erfindungsgemäße Umlenkspiegelstruktur basiert in der Herstellung auf den bekannten Verfähren zur Herstellung von Tripelreflektoren. Die hier vorliegende Beschreibung stützt sich vor allem auf Tripel, die dem Fullcube nahe kommen. Natürlich gibt es auch andere Tripelformen, wie zum Beispiel die dreiseitige Pyramide. Hier soll aber der Abwandlung des Fullcubes der Vorzug gegeben werden, weil er grundsätzlich einen wesentlich geringeren Streuverlust hat als die Pyramide. Die Pyramide als Tripel ist dann vorzuziehen, wenn die mechanische Herstellung sehr kleine Tripel erfordert, denn pyramidale Tripelstrukturen lassen sich aus einer ebenen gemeinsamen Fläche schneiden, hingegen benötigen Fullcube-Tripel im Werkzeugbau die Anordnung einer Vielzahl von Bauelementen, um große strukturierte Flächen aus einer Vielzahl von Tripeln darzustellen. Die Fertigungsmethoden und ihre Vor- und Nachteile bei der Herstellung von Tripeln sind dem Fachmann bekannt und brauchen hier nicht wiederholt zu werden.

Die Erfindung macht sich die Erfahrungen zu Nutze, die man mit der Herstellung und Verwendung von Fullcube-Tripeln in der Technik gemacht hat. Der Fullcube-Tripel hat die vorzügliche Eigenschaft, einfallendes Licht in einem weiten Toleranzbereich des Einfallwinkels zu empfangen und nahezu vollständig an die Lichtquelle zu retroflektieren. Die Retroflexion erfolgt über die Lichtspiegelung auf den drei quadratischen Flächen des Fullcube-Tripels. Diese Winkeltoleranz für das einfallene Licht wird in der praktische Anwendung heute bei den meisten Reflexionslichtschranken genutzt. Die Montage und Ausrichtung der Rückstrahler winkelgerecht zum Sender/Empfängersystem ist einfach und fehlertolerant. Auch Strahlbewegungen durch Vibrationen werden meist von diesem Reflexionselement mit Fullcube-Tripeln toleriert. Bei Laserlichtsensoren wird die Anwendung von Tripeln als Reflexionselement sehr schwierig, weil der Laser bei unsachgemäßer Anwendung Informationen über seine Bewegung auf der Retroflexionsstruktur und Informationen über die Gestalt der Retroflexionsstruktur liefert, statt über den zu beobachtenden Raum zwischen Sender/Empfänger und Retroflexionsspiegel. Die **DE 197 27 527** zeigt auf, wie Retroflexionsspiegel für Lasersensoren gestaltet sein müssen, erläutert auch die Unterschiede zwischen Fullcube und pyramidalen Tripeln und lehrt, welche Gestalt das Strahlenbündel des Lasersensors haben muss. Bei Anwendung der Lehre erhält man auch mit Lasersensoren die Vorteile der Struktur aus Fullcube-Tripeln und kann ebenso die erfindungsgemäße Umlenkspiegelstruktur besser nutzen.

Aus der DE-A-24 19 629 ist ein rückweisender Reflektor bekannt, der aus mehreren Reflektorelementen besteht. Dieser Reflektor weist Standardreflektorelemente sowie sogenannte "schräge" Reflektorelemente auf. Die "schrägen" Reflektorelemente bestehen aus drei Teilflächen, von denen die erste und die zweite Teilfläche als gleich große Trapeze und die dritte Teilfläche als Fünfeck ausgebildet ist. Die erste und die dritte Teilfläche sowie die zweite und die dritte Teilfläche schließen jeweis einen Dihedralwinkel ein, der im wesentlichen 90° beträgt. Der Dihedralwinkel zwischen der ersten und der zweiten Teilfläche ist größer als 90°.

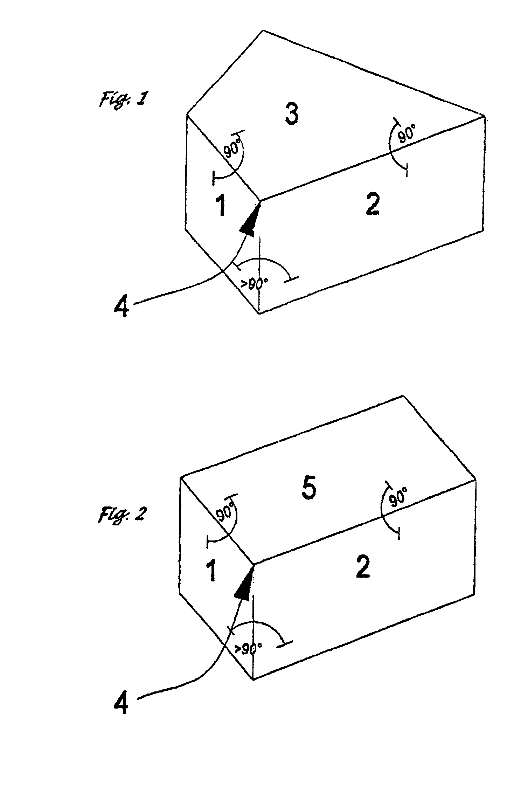

Die Erfindung
schlägt eine Umlenkspiegelstruktur vor, die aus einer Vielzahl von Tripeln besteht. Diese Tripel unterscheiden sich zu Retroflexionstripeln in einem erheblichen Detail. Nicht alle Spiegelseiten des verwendeten Tripels stehen zueinander im Rechten Winkel, wie es bei der Retroflexion erforderlich ist.
Die Umlenkspiegelstruktur verwendet als Kemelement einen Tripel (**Fig. 1**) gebildet aus drei Spiegelflächen (1, 2, 3) oder (**Fig. 2**) die Spiegelflächen (1, 2, 5), wobei die Spiegelfläche (2) im Bezug zur Spiegelfläche (1) in einem Öffnungswinkel deutlich größer 90° steht.
Als Retroflexionselement wäre so ein Tripel mit einer scheinbaren fehlerhaft angeordneten Spiegelfläche nicht mehr funktionsfähig. Denn das einfallende Lichtbündel wird in drei Lichtbündel aufgeteilt. Bei Tripelstrukturen, die als Glaskörper ausgebildet sind, entstehen noch weitere Strahlengänge, die hier nicht betrachtet werden brauchen.
Nachdem nun die Spiegelfläche (2) über die gemeinsame Kante zur Spiegelfläche (1) gedreht wurde, wird sie zugleich gestreckt.

Die Streckung der Spiegelfläche (2) bewirkt, dass mehr Spiegelfläche zur Verfügung steht, auf der sich Referenzpunkte finden für die Strahlengänge, die von den anderen beiden Spiegelflächen kommen. Auch bei Umkehrung der Strahlengänge, wenn das vom Sender eintreffende Lichtbündel zuerst die Spiegelfläche (2) trifft, steht mehr Einfangfläche zur Verfügung mit möglichen Referenzpunkten der Strahlengänge zu den beiden anderen Spiegelflächen.

Damit sich die erfindungsgemäßen Tripel nahtlos zu einer Umlenkspiegelstruktur zusammenfügen und die Lichteinfangfähigkeit möglichst groß ist, wird auch die Spiegelseite (3) in **Fig. 1** und die entsprechende Spiegelseite (5) in **Fig. 2** von einem Quadrat abweichend vergrößert. Mit diesen Maßnahmen wird die Intensität der drei Strahlenbündel, die den erfindungsgemäßen Tripel verlassen, Im Verhältnis zueinander erheblich in ihrer Intensität verändert.

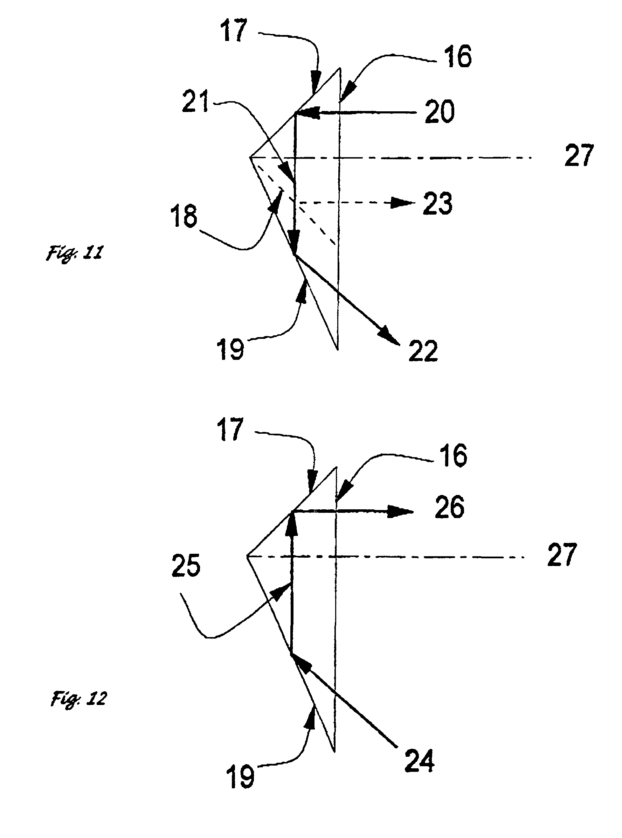

**Fig. 11** und **12** zeigen den entstehenden Lichtweg. Bei senkrecht einfallendem Lichtbündel (20) wird der überwiegende Teil des Lichtbündels in die Raumrichtung (22) umgelenkt. Bei schräg einfallendem Lichtbündel (24) wird der überwiegende Teil des Lichtbündels lotrecht (27) zur Lichteintrittsfläche in die Raumrichtung (26) umgelenkt. Der verlorene Teil des Lichtbündels, der nicht an der beabsichtigten Umlenkung teilnimmt, wird zu einem geringen Teil reflektiert und zu einem Teil in die entgegengesetzte Verlustrichtung zur Raumrichtung (22) gespiegelt, wobei das Lot (27) der Linie entspricht, um die die Raumrichtung (22) zur Verlustrichtung gespiegelt wird.
Mit dieser Umlenkspiegelstruktur geht also zum einen etwas Licht verloren, dafür wird aber die Winkeltoleranz gewonnen für zwei einfallende Strahlpositionen (22) und (24).

Es sei darauf hingewiesen, dass die Achsenlage der Tripel in Bezug zur Lichteintrittfläche natürlich variiert werden darf, so dass die Strahlenwege für die Umlenkung sich ändern lassen sowohl für den Winkel des einstrahlenden Lichtbündels als auch für den Winkel des umgelenkten Lichtbündels im Bezug zur Lichteintrittsfläche oder zum Lot, das auf die Lichteintrittsfläche gefällt ist.

Die Wirkung der Umlenkspiegelstruktur wird noch weiter gesteigert durch die Verwendung von Mikrotripeln, deren kleinste Kantenlänge < 2,1 mm ist. Denn Mikrotripel zeigen noch eine wesentlich größere Winkeltoleranz gegenüber dem einfallenden Lichtbündel als herkömmliche Makrotripel, Gleichzeitig wird es durch die Verwendung der Mikrotripel möglich, die in der Technik vorhandenen hochpräzisen Fertigungsmöglichkeiten zur Mikrostrukturtechnik zu nutzen, so dass solche Mikrotripel eine wesentlich höhere Lichtausbeute erbringen als herkömmliche Makrotripel.

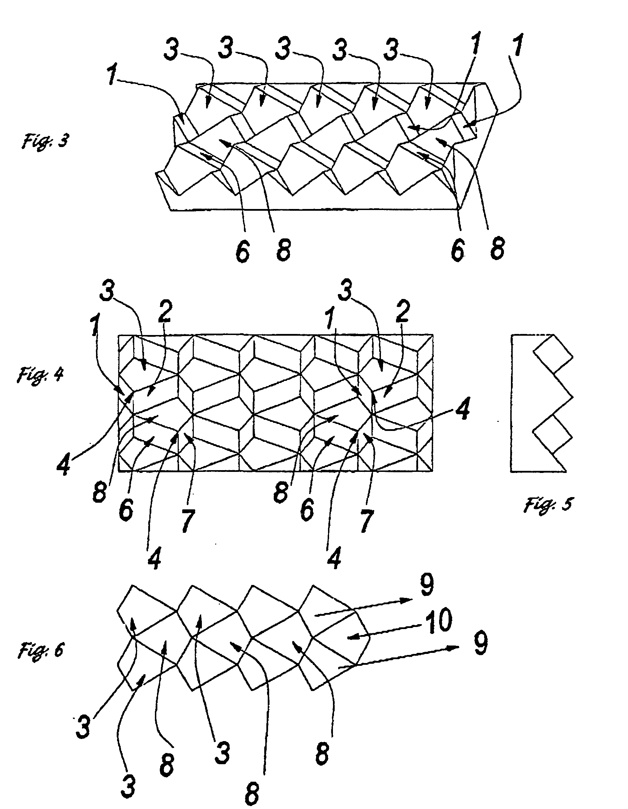

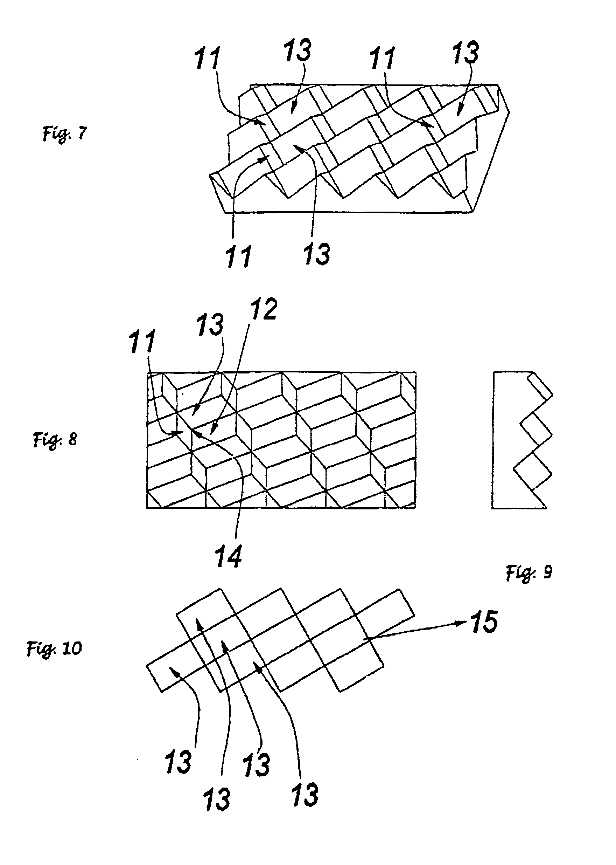

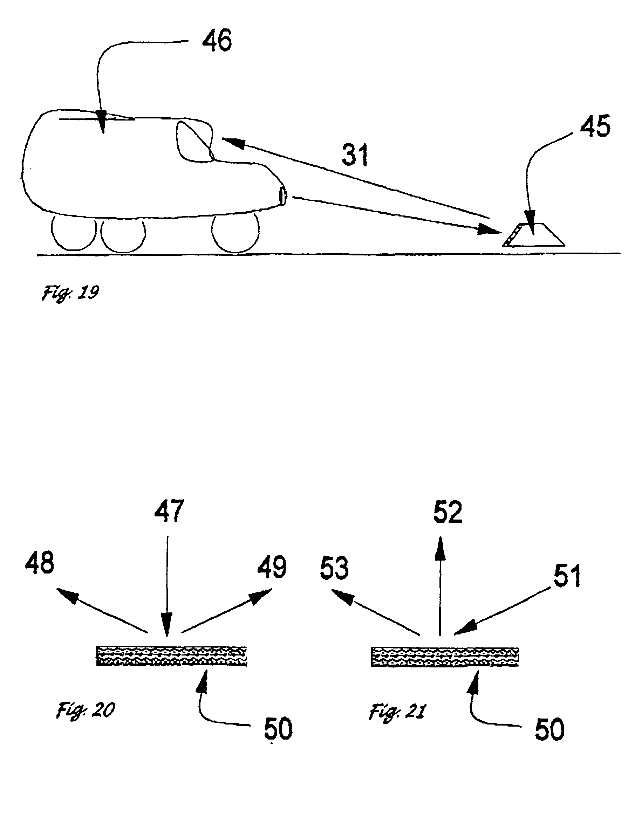

Bei der erfindungsgemäßen Umlenkspiegelstruktur kann man zwei grundsätzliche Funktionen unterscheiden.
Zum einen eine beispielhafte Struktur wie in **Fig. 3** aus Tripeln der **Fig. 1** zusammengefügt, die das einfallende Lichtbündel nach zwei Raumrichtungen umlenkt, wie in **Fig. 20** gezeigt, denn dabei geht nahezu kein Licht verloren.
Zum anderen eine Umlenkspiegelstruktur wie beispielhaft in **Fig. 7** gezeigt, die aus Tripeln der **Fig. 2** zusammengefügt ist und das Licht überwiegend in eine Raumrichtung umlenkt, wie in **Fig. 11** und 12 gezeigt.

Die Umlenkspiegelstruktur ist wegen ihrer Toleranz gegenüber dem Winkel des einfallenden Lichbündels sehr einfach zu handhaben und für den gewünschten Umlenkweg zu fertigen. Wird die Fläche (2) des Tripels nur um etwa 8° gedreht, so dass sie in Bezug zur Fläche (1) einen Öffnungswinkel von 98° besitzt, so kann bereits eine Umlenkungswirkung der Umlenkspiegelstruktur von etwa 30° bis 35° erreicht werden im Winkelbezug zu dem einfallenden Lichtbündel. Die erreichbaren Umlenkwinkel sind von der Materialbeschaffenheit und Oberfläche der Umlenkspiegelstruktur abhängig. Bei Glaskörpern, Kunststoffkörpem oder bei Metallkörpern oder Körpern mit metallisierter Oberfläche unterscheiden sich die Umlenkeigenschaften geringfügig um +/- 7°. Der unterschiedlich auftretende Lichtverlust, der ebenfalls von der Materialwahl des Tripels abhängig ist, beeinträchtigt aber nicht die letztlich erzielbare Handhabungstoleranz solcher Umlenkspiegelstrukturen. Mit dieser neuartigen Struktur werden großartige Möglichkeiten vor allem in der optischen Sensorik aufgetan. Die nachfolgenden Zeichnungen sollen einen beispielhaften Überblick über Funktion und Anwendungsmöglichkeiten der Umlenkspiegelstruktur geben.

In den Zeichnungen zeigen
**Fig. 1** einen einzelnen Tripel der Umlenkspiegelstruktur, nach Anspruch 1. Der Tripel besteht aus drei Spiegelflächen (1, 2, 3), von denen die beiden Spiegelflächen (1 und 3) sowie die beiden Splegelflächen (2 und 3) zueinander im Rechten Winkel stehen. Auffällig ist die Form der Spiegelfläche (3), die ein ungleichseitiges Viereck ist.
   Wesentliches Merkmal des Tripels ist, dass die beiden Spiegelflächen (1 und 2) in einem Winkel größer 90° zueinander angeordnet sind. Das Zentrum des Tripels ist der tiefste Punkt (4), den alle drei Spiegelflächen berühren. Die auf eine Ebene projizierte Grundfläche des Tripels ist ein ungleichmäßiges Sechseck. Die Form des Tripels ist so beschaffen, dass er mit anderen gleichartigen Tripeln zu einer Umlenkspiegelstruktur (**Fig. 3** und **Fig. 4**) gefügt werden kann, die nach zwei verschiedenen Richtungen das einfallende Licht umlenken kann und wie ein Strahlteiler wirkt.
**Fig. 2** einen einzelnen Tripel der Umlenkspiegelstruktur, nach Anspruch 2. Der Tripel besteht aus drei Spiegelflächen (1, 2, 5), von denen die beiden Spiegelflächen (1 und 5) sowie die beiden Spiegelflächen (2 und 5) zueinander im Rechten Winkel stehen. Auffällig ist die Form der Spiegelflächen (2 und 5), die jeweils ein gestrecktes Rechteck sind.
   Wesentliches Merkmal auch dieses Tripels ist, dass die beiden Spiegelflächen (1 und 2) in einem Winkel größer 90° zueinander angeordnet sind. Das Zentrum des Tripels ist der tiefste Punkt (4). Die auf eine Ebene projizierte Grundfläche des Tripels ist ein ungleichmäßiges Sechseck. Die Form des Tripels ist so beschaffen, dass er mit anderen gleichartigen Tripein zu einer
   Umlenkspiegelstruktur (**Fig. 7** und **Fig. 8**) gefügt werden kann, die das einfallende Licht überwiegend in eine Raumrichtung umlenken kann.
**Fig. 3** eine Umlenkspiegelstruktur, die aus Tripeln der **Fig. 1** zusammengefügt ist Durch die perspektivische Ansicht sind jeweils die Spiegelflächen (2 und 7) der **Fig. 4** nicht sichtbar. Die Spiegelflächen (1) und (3) zeigen den Tripeln der ersten Ausrichtung. Die Spiegelflächen (6) und (8) zeigen den Tripeln der zweiten Ausrichtung In seiner um 180° gedrehten Position gegenüber dem Tripel der ersten Ausrichtung. Die Tripel einer gleichen Ausrichtung sind in Reihen angeordnet. Es wechseln sich Reihen mit gegenläufiger Ausrichtung ab. Die Ausrichtung des Tripels (**Fig. 11**) bestimmt die Raumrichtung, zu der er das einfallende Licht umlenkt oder aus der er Licht empfangen soll.
**Fig. 4** die Umlenkspiegelstruktur der **Fig. 3** in der Sicht von oben und somit die Projektion aller Kanten auf eine Grundfläche. Die Spiegelflächen (1, 2, 3), die um das Tripelzentrum (4) angeordnet sind, bilden den Tripel der ersten Ausrichtung, **Fig. 6** (9). Die Spiegelflächen (6, 7, 8), die um das Tripelzentrum (4) angeordnet sind, bilden den Tripel der gegenläufigen zweiten Ausrichtung, **Fig. 6** (10).
**Fig. 5** den Schnitt durch die Umlenkspiegelstruktur der **Fig. 4.** Der Schnitt durchläuft die gegenläufigen Tripelreihen.
**Fig. 6** die Umlenkspiegelstruktur im Raum so gedreht, dass alle Spiegelflächen (3) der Tripel der ersten Ausrichtung (9) mit den Spiegelflächen (8) der Tripel der zweiten Ausrichtung (10) eine geschlossen wirkende Fläche zeigen. Hier wird deutlich, dass die Umlenkspiegelstruktur sich aus den Tripeln der **Fig. 1** nahtlos zusammenfügen läßt.
**Fig. 7** die Umlenkspiegelstruktur nach Anspruch 2, die aus Tripeln der **Fig. 2** zusammengefügt ist. Durch die perspektivische Ansicht ist jeweils eine Spiegelfläche (12) der **Fig. 8** nicht sichtbar.
**Fig. 8** die selbe Umlenkspiegeistruktur der **Fig. 7** in der Sicht von oben und somit die Projektion aller Kanten auf eine Grundfläche. Alle Spiegelflächen der Tripel sind Rechtecke.
   Die Spiegelflächen (11, 12, 13) sind um das Tripelzentrum (14) angeordnet. Alle Tripel sind gleichmäßig ausgerichtet und lenken deshalb das Licht überwiegend nur in eine Raumrichtung um.
**Fig. 9** den Schnitt durch die Umlenkspiegelstruktur der **Fig. 8.** Der Schnitt durchläuft die alle in gleicher Ausrichtung angeordneten Tripel.
**Fig. 10** die Umlenkspiegelstruktur der **Fig. 7** im Raum so gedreht, dass alle Spiegelflächen (13) der Tripel gleicher Ausrichtung (15) eine geschlossen wirkende Fläche zeigen.
**Fig. 11** erläutert das Funktionsprinzip der Umlenkspiegelstruktur und zeigt den Vergleich zu einem Retroflexionstripel, Der Tripel ist vereinfacht als zweidimensionaler optischer Glaskörper dargestellt mit deutlich übertriebenen Winkeln, um die Funktionsweise sichtbar zu machen. Denn hingegen in der Praxis sind bereits geringe Winkelveränderungen von großer Wirkung, jedoch zeichnerisch nicht deutlich sichtbar.

Der optische Glaskörper besitzt die optische Achse (27), die hier in diesem Beispiel zugleich das Lot, gefällt auf die Lichteintrittseite (16), ist. Natürlich kann die optische Achse auch abweichend vom Lot (27) liegen, wenn der Tripel entsprechend in seiner Lage zur Lichteintrittseite (16) verändert wird.

Die Linie (17) repräsentiert in diesem Beispiel die In **Fig. 1** als (1) und (3) bezeichneten Spiegelflächen und in **Fig. 2** als (1) und (5) bezeichneten Spiegelflächen, welche zueinander im Rechten Winkel stehen. Die gestrichelte Linie (18) markiert die Lage einer gedachten dritten Spiegelfläche, welche zu den beiden anderen Spiegelflächen im Rechten Winkel steht. Diese Bauweise würde einem Retroflexionsspiegel entsprechen, in dem alle drei Spiegelflächen des Tripels im Rechten Winkel zueinander stehen. Das von einem Lichtsender ausgesandte Lichtbündel (20) tritt in die Lichteintrittseite des Glaskörpers ein, wird über die Spiegelflächen des Retroflexionstripels umgelenkt und tritt als Lichtbündel (23) wieder aus, um in die Raumrichtung des Lichtsenders zurückzukehren. Zwischen dem Strahlengang des eintretenden Lichtbündels (20) und dem austretenden Lichtbündel (23) tritt ein Strahlversatz auf, der durch die Größe des Retroflexionstripels bestimmt ist.

Jetzt wird in diesem Beispiel der **Fig. 11** die Spiegelfläche (18) ersetzt durch die Spiegelfläche (19), welche in **Fig. 1** als Spiegelfläche (2) und in **Fig. 2** auch als Spiegelfläche (2) bezeichnet ist. Das heißt, die Spiegelfläche (18) wird um die Achse gedreht, wobei die Drehachse durch die gemeinsame Kante der Spiegelflächen (1) und (2) der **Fig. 1** und **Fig. 2** gegeben ist, und zugleich wird das Rechteck der Spiegelfläche (2) gestreckt, so dass der Winkel zwischen der Spiegelfläche (1) und (2) größer 90° wird.
Die Spiegelfläche (2) steht in **Fig. 1** im Rechten Winkel zur Spiegelfläche (3), jedoch in einem Winkel größer 90° zur Spiegelfläche (1).
Die Spiegelfläche (2) steht in **Fig. 2** im Rechten Winkel zur Spiegelfläche (5), jedoch in einem Winkel größer 90° zur Spiegelfläche (1).
Die Spiegelfläche (2) aus den **Fig. 1** und **2** wird hier als (19) gekennzeichnet. Das von einem Lichtsender ausgesandte Lichtbündel (20) tritt in die Tripeloberfläche ein, die Lichteintrittseite des Tripels, und wird zunächst als Strahlenbündel (21) reflektiert und dann über die Spiegelseite (19) abgelenkt in die Raumrichtung (22). Das Strahlenbündel kehrt also jetzt nicht zum Lichtsender zurück, sondern wird umgelenkt.
**Fig. 12** den gleichen Tripel wie **Fig. 11,** allerdings ist die Laufrichtung des Strahlenganges des Lichtbündels jetzt umgekehrt. Vom Lichtsender wird das Strahlenbündel (24) ausgesandt, welches abweichend vom Lot (27) schräg in die Lichteintrittseite (16) eintritt, dann Ober die Spiegelfläche (19) umgelenkt wird zur Position (17), welche die Spielflächen (1) und (3) in **Fig. 1** oder (1) und (5) in **Fig. 2** repräsentiert, und verlässt den Tripel schließlich als Strahlenbündel (26).

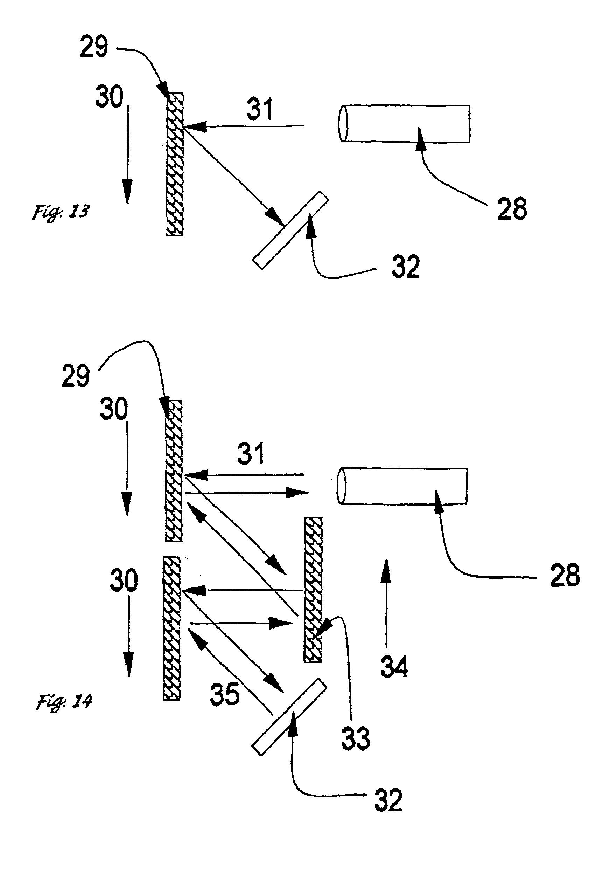

**Fig. 13** und folgende zeigen nun einige praktische Anwendungen der Umlenkspiegelstruktur. Als Beispiel wird die einseitig ausgerichtete Umlenkspiegelstruktur gewählt, die aus Tripeln der **Fig. 2** zusammengefügt ist und deren Strahlenwege einfacher darstellbar sind.
   Der Sender (28), der ein beliebiges Licht oder Laserlicht oder reflektierbare Elementarteilchen aussendet, sendet sein Strahlenbündel (31) auf die Umlenkspiegelstruktur (29). Diese ist in Richtung (30) ausgerichtet. Das Strahlenbündel (31) wird umgelenkt und auf den Empfänger (32) geworfen. Dieser Empfänger kann nun das Signal auswerten, zum Beispiel in der Funktion einer Lichtschranke.
   Jedoch kann (32) auch ein Retroflektionselement sein, das das Lichbündel (31) auf dem gleichen Weg zurückwirft, so dass es beim Sender wieder zurückkehrt. Der Sender könnte dann zugleich auch Empfänger sein, wie es bei einer Reflexionslichtschranke beispielsweise der Fall ist.
**Fig. 14** diesen Weg des Lichtbündels (31), wie es als Lichtbündel (35) zurückkehrt zum Sender/Empfänger. Das Lichtbündel wird über zwei gegenüberliegende Umlenkspiegelstrukturen (29) und (33) mehrfach umgelenkt. Dazu sind die Umlenkspiegelstrukturen in gegenläufigen Ausrichtungen (30) und (34) angeordnet. Im Zwischenraum zwischen (29) und (33) entsteht dadurch ein Lichtgitter. Dieses Lichtgitter kann zum Beispiel an einer Kunststoffspritzgußmaschine überwachen, ob ein Kunststoffteil hindurchfällt. Die erfindungsgemäße Umlenkspiegelstruktur ermöglicht also mit geringem elektronischem Aufwand ein Lichtgitter zur Sicherheitsüberwachung zu schaffen. Bisher konnte dies nur mit der Anordnung vieler Lichtschranken untereinander angeordnet aufwendig gelöst werden.

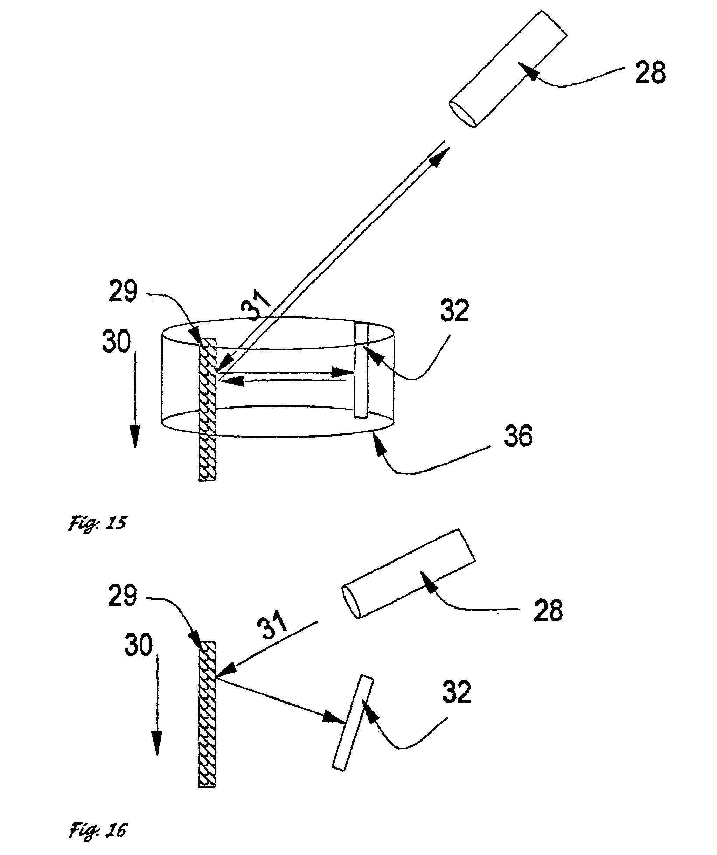

**Fig. 15** nun eine besondere Überwachungsmöglichkeit für den Einsatz einer Lichtschranke oder eines anderen optischen Meßsystems. Oft ist an Maschinen kein Platz, um Lichtschranken zu montieren. In der Textilindustrie bereitet es Probleme, mit dem Lichtbündel hinter die Gamspulen zu blicken, um den Fadenbruch zu überwachen. Mit der erfindungsgemäßen Umlenkspiegelstruktur ist das Problem zu lösen. Man kann mit ihrer Hilfe auch von außen, das Innere eines Rohres (36) überwachen. Der Sender/Empfänger sendet das Strahlenbündel (31) auf die Umlenkspiegelstruktur (29), von dort wird es auf den Retroflektor (32) geworfen und kehrt dann auf gleichem Weg zum Sender/Empfänger zurück, der außerhalb des beispielhaften Rohres angeordnet ist.
   Sind die Elemente (29) und (32) aus Metall oder Borosilikatglas zum Beispiel gefertigt, kann so auch ein Bereich mit hohen Temperaturen von zum Beispiel 500°C von der ReflexionsLichtschranke (28) aus sicherer Entfernung überwacht werden. Zugleich ist die **Fig. 15** auch eine Anwendungsdemonstration für eine technisch besonders schwieriges Meßaufgabe. Soll zum Beispiel innerhalb eines Kugellagers die Drehung oder Verwindung überwacht werden, so kann die Meßelektronik außerhalb des Kugellagers positioniert werden, während innerhalb des Kugellagers (36) die Umlenkspiegelstruktur (29) angeordnet wird mit einer zweiten oder einem Retroflexionsspiegel (32) wie in dieser **Fig. 15** dargestellt.
**Fig. 16** soll verdeutlichen, dass die Umlenkspiegelstruktur (29) auch so beschaffen sein kann, dass der Winkel des einfallenden und des ausfallenden Lichtbündels anders bestimmt werden kann, als in den bisherigen Beispielen gezeigt. Dazu wird die Umlenkspiegelstruktur aus den erfindungsgemäßen Tripeln in der Weise zusammengefügt, dass die Achsen der Tripel in ihrer Lage verändert werden.

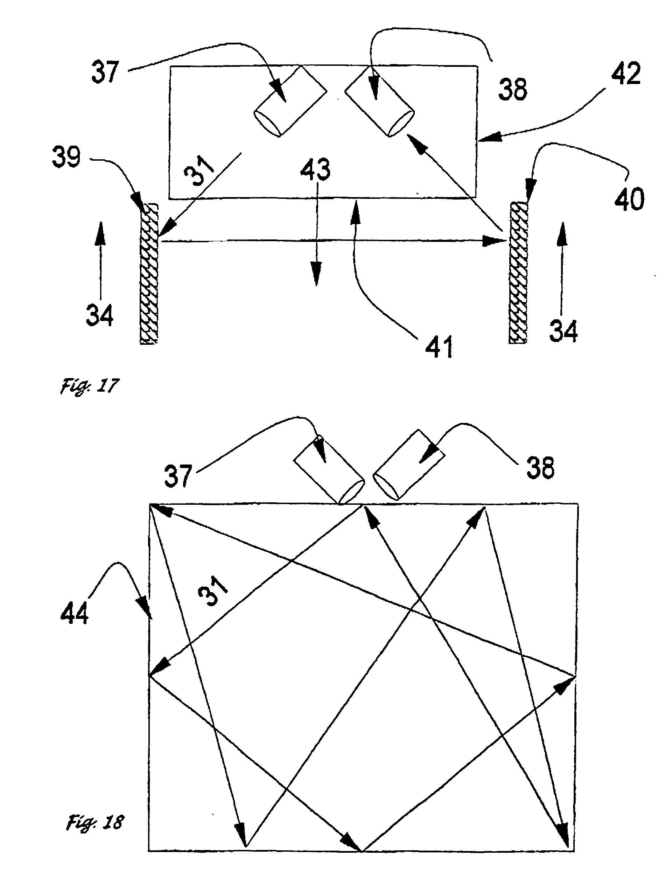

**Fig. 17** eine Anwendung, die besonders für Rolltore geeignet ist, die von oben kommend schließen. Um mit einer einzigen Lichtschranke, die aus dem Sender (37) und dem Empfänger (38) besteht, den gesamten Bereich des Tores zu überwachen. Das Lichtschrankensystem ist am beweglichen Rolltor befestigt. Auf den Seiten des Toren befinden sich lange Bänder (39) und (40) aus der erfindungsgemäßen Umlenkspiegelstruktur in der Ausrichtung (34) angeordnet. Das Lichtbündel (31) wird über die Bänder (39) und (40) zum Empfänger umgelenkt. Dieses Lichtbündel verläuft also zwischen den beiden Bändern waagerecht und liegt unterhalb der Torkante (41) des Rolltores (42), das sich in Richtung (43) senkt. Damit läuft also das Lichbündel immer vor der Torkante und kann über den gesamten Weg des Rolltores den Torbereich darauf hin überwachen, ob ein Gegenstand den Lichtweg stört und das Tor gegebenenfalls elektronisch zum Anhalten veranlassen. Diese elegante und preisgünstige Überwachungsmethode, die nicht Gegenstand dieser Erfindung ist, wird mit der erfindungsgemäßen Umlenkspiegelstruktur möglich.
**Fig. 18** einen Sender (37) und einen Empfänger (38), die mit dem Lichtbündel (31) den Raum (44) als Rauchmelder überwachen sollen. Durch Anordnung verschiedener Umlenkspiegelstrukturen an den Raumwänden, wobei sich die Umlenkspiegelstrukturen in der Winkelstellung der Spiegelfläche (2) der **Fig. 2** nur unterscheiden, kann das Lichtbündel einen gewünschten Weg durch den Raum nehmen.
**Fig. 19** ein Beispiel aus dem Straßenverkehr. Markierungsknöpfe (45) auf den Straßen, die retroflektieren, müssen das Problem lösen, das Lichtbündel (31) der Kraftfahrzeugscheinwerfer für den bei Lastkraftwagen (46) viel höher sitzenden Fahrer über Retroflexion sichtbar zu machen. Retroflektoren senden aber das Licht direkt zur Lichtquelle zurück. Wenn diesen Retroflexionselementen, die meistens aus Tripelstrukturen bestehen, auch erfindungsgemäße Tripel der **Fig. 2** hinzugefügt werden, so kann das Lichtbündel der Scheinwerfer auch zum Auge des Fahrers umgelenkt werden. Der Rückstrahlbereich des Markierungsknopfes (45) wird dadurch erweitert.
**Fig. 20** die Funktion der Umlenkspiegelstruktur der **Fig. 3,** die aus erfindungsgemäßen Tripeln der **Fig. 1** zusammengesetzt ist. Das Lichtbündel (47) wird auf die Umlenkspiegelstruktur (50) gesendet und dort in zwei Lichtbündel (48) und (49) aufgeteilt, die in gegenläufige Richtungen die Umlenkspiegelstruktur (50) verlassen. Diese Wirkung eines Strahlteilers in Kombination mit den bisher vorgestellten Elementen und Anordnungen ermöglicht noch komplexere Lichtgitter und Überwachungsaufgaben bei Lichtsensorsystemen. In der Umlenkung von Elementarteilchen kann diese Struktur, zum Beispiel aus Nickel oder Blei gefertigt, als Strahlteiler oder Prallwand verwendet werden, so dass die frontal auftreffenden Elementarteilchen zu den Seiten abgelenkt werden.
**Fig. 21** die gleiche Umlenkspiegelstruktur wie **Fig. 20,** jedoch wird das Lichtbündel aus der Raumrichtung (51) schräg auf die Struktur gesendet und zu den Raumrichtungen (52) und (53) umgelenkt. Hier arbeitet die Umlenkspiegelstruktur wie ein Strahlteiler, so dass die beiden abgehenden Strahlenbündel von zwei unterschiedlichen Meßsystemen empfangen und ausgewertet werden können.
   Für beide **Fig. 20** und **Fig. 21** gibt es noch eine weitere Möglichkeit. Es kann an einer oder den beiden Raumrichtungen, der von der Umlenkspiegelstruktur abgehenden Lichtbündel jeweils ein Retroflektor angeordnet werden, so dass die Lichtbündel entsprechend zurückkehren zum Sender/Empfänger oder zu einer Richtung verstärkt werden.

Die erfindungsgemäße Umlenkspiegelstruktur kann auch zu großen Flächen auf Schildern oder zu Bändern oder Folien angeordnet werden. Sie können auch in einfacheren Aufgaben der Beleuchtungstechnik, zum Beispiel zur Hintergrundbeleuchtung von LCD-Displays verwendet werden oder zur besseren Lichtverteilung von Beleuchtungskörpern im Raum.

Mit einer ersten Experimentalstruktur, die der **Fig. 2** entspricht wurden Versuche durchgeführt. Bereits mit einem einfachen optischen Sensor, der aus getrennten Sender- und Empfänger-Elementen bestand, konnten zwei Umlenkungen sehr einfach und winkeltolerant auf ca. 9 m Abstand durchgeführt werden, um zum Beispiel die Sensoranordnung für ein großes Rolltor wie in **Fig. 17** zu simulieren. Durch die Verwendung von Mikrotripeln wurde eine perfekte Umlenkstabilität auch dann erreicht, wenn der Sendestrahl beim Eintreffen auf der Umlenkspiegelstruktur vibrierte. Es ist damit zu rechnen, dass die erfindungsgemäße Umlenkspiegelstruktur auch auf Distanzen bis 100 m für die Messtechnik einsetzbar ist.
Aber die Versuche haben noch eine andere hervorragende Eigenschaft der Umlenkspiegelstruktur gezeigt. Zwar ist sie tolerant gegenüber dem Winkel des einfallenden Lichtbündels ähnlich einem Fullcube-Reflektor, aber sie wirkt auf den ausgehenden Winkel des Lichtbündels erheblich ein, wenn sie durch Umweltfaktoren, wie Erwärmung verändert wird. Deshalb Ist diese Umlenkspiegelstruktur ein hervorragendes sensorisches Element, um geringe Veränderungen, wie Wärme, Stoß, Stauchung, Verwindung und alle Arten geringster Verformung zu signalisieren. Auf schnelldrehenden Wellen zum Beispiel im Schiffbau aufgebracht, kann optisch jede Veränderung der Welle über die Veränderung der Umlenkeigenschaft der Umtenkspiegelstruktur abgefragt werden. Das erklärt sich aus der Winkelsituation der verwendeten neuartigen Tripel. Bereits eine geringe Winkelveränderung der Spiegelseite (3) in Bezug zur Spiegelfläche (1) bewirkt eine vielfach höhere Umlenkung des erfindungsgemäßen Tripels. Läßt man Ober viele Umlenkspiegelstrukturen das Lichtbündel laufen, so wird die Eigenschaft des Gesamtsystems als sensorisch wirkender Spiegel verstärkt.

## Patentansprüche

1. Umlenkspiegelstruktur mit einer Vielzahl von Tripeln, wobei die auf eine Ebene projizierte Grundfläche der Tripel ein ungleichmäßiges Sechseck ist, wobei die Tripel jeweils eine erste (1), eine zweite (2) und eine ungleichseitig viereckige dritte Spiegelfläche ( 3, 5) aufweisen, wobei die erste (1) und die dritte Spiegelfläche (3, 5) sowie die zweite (2) und die dritte Spiegelfläche (3, 5) aufeinander senkrecht stehen, und wobei die erste (1) und die zweite Spiegelfläche (2) in einem Winkel größer 90° zueinander angeordnet sind, **dadurch gekennzeichnet, dass** die zweite Spiegelfläche (2) rechteckig ist und größer ist als die erste Spiegelfläche (1).

2. Umlenkspiegelstruktur nach Anspruch 1, **dadurch gekennzeichnet, dass** die erste Spiegelfläche (1) rechteckig ist und sich die zweite Spiegelfläche (2) weiter von der mit der ersten Spiegelfläche (1) gemeinsamen Kante weg erstreckt als die erste Spiegelfläche (1).

3. Umlenkspiegelstruktur nach Anspruch 1 und 2, **dadurch gekennzeichnet, dass** die Tripel als Mikrotripel ausgebildet sind, deren kleinste Kantenlänge kleiner als 2,1 mm ist.

4. Umlenkspiegelstruktur nach einem der vorangehenden Ansprüche, **dadurch gekennzeichnet, dass** die Tripel in Reihen angeordnet sind.

5. Umlenkspiegelstruktur nach Anspruch 4, **dadurch gekennzeichnet, dass** die Tripel benachbarter Reihen eine Ausrichtung der zweiten Spiegelflächen (2) in entgegengesetzter Richtung aufweisen.

6. Umlenkspiegelstruktur nach Anspruch 4, **dadurch gekennzeichnet, dass** die Tripel benachbarter Reihen eine Ausrichtung der zweiten Spiegelflächen (2) in gleicher Richtung aufweisen.

7. Umlenkspiegelstruktur nach einem der vorangehenden Ansprüche, **dadurch gekennzeichnet, dass** sie eine Lichteintrittsseite (16) sowie eine optische Achse aufweist, die einem auf die Lichteintrittsseite (16) gefällten Lot (27) entspricht.

8. Umlenkspiegelstruktur nach einem Ansprüche 1 bis 6, **dadurch gekennzeichnet, dass** sie eine Lichteintrittsseite (16) sowie eine optische Achse aufweist, die von einem auf die Lichteintrittsseite (16) gefällten Lot (27) abweicht.

9. Umlenkspiegelstruktur nach einem der vorangehenden Ansprüche, **dadurch gekennzeichnet, dass** sie aus Metall oder Borosilikatglas gefertigt ist.

10. Optischer Sensor mit einem Lichtsender (28) und einem Lichtempfänger (32), **gekennzeichnet durch** mindestens eine Umlenkspiegelstruktur (29) nach einem der vorangehenden Ansprüche, **durch** die Licht vom Lichtsender (28) zum Lichtempfänger (32) umlenkbar ist.

11. Optischer Sensor nach Anspruch 10, **gekennzeichnet durch** einen kombinierten Lichtsender und -empfänger (28) und einen Retroflektor (32), auf den das Licht **durch** die Umlenkspiegelstruktur (29) oder die Umlenkspiegelstrukturen umlenkbar ist und **durch** den das Licht über die Umlenkspiegelstruktur (29) oder die Umlenkspiegelstrukturen (29) zum Lichtsender/-empfänger (28) zurückreflektierbar ist.

12. Optischer Sensor nach Anspruch 10 oder 11, **gekennzeichnet durch** mehrere Umlenkspiegelstrukturen (29, 33), deren optische Achsen unterschiedlich bezüglich ihres auf die Lichteintrittsseite gefällten Lots orientiert sind.

13. Verwendung eines optischen Sensors nach einem der Ansprüche 10 bis 12 als Lichtschranke.

14. Verwendung eines optischen Sensors nach Anspruch 12 als Rauchmelder.

15. Verwendung einer Umlenkspiegelstruktur nach einem der Ansprüche 1 bis 9 als Markierung im Straßenverkehr.

16. Verwendung einer Umlenkspiegelstruktur nach einem der Ansprüche 1 bis 9 als Sensor für Wärme, Stoß, Stauchung, Verwindung oder Verformung.

## Claims

1. Deflecting mirror structure comprising a multiplicity of triples, the base of the triple projected onto a plane being an irregular hexagon, the triples in each case having a first (1), a second (2) and an unequal-sided quadrilateral third mirror face (3, 5), the first (1) and the third mirror face (3, 5) and the second (2) and the third mirror face (3, 5) being perpendicular to one another, and the first (1) and the second mirror face (2) being arranged at an angle of more than 90° with respect to one another, **characterized in that** the second mirror face (2) is rectangular and is larger than the first mirror face (1).

2. Deflecting mirror structure according to Claim 1, **characterized in that** the first mirror face (1) is rectangular and the second mirror face (2) extends further from the edge in common with the first mirror face (1) than does the first mirror face (1).

3. Deflecting mirror structure according to Claims 1 and 2, **characterized in that** the triples are designed as microtriples, the smallest edge length of which is less than 2.1 mm.

4. Deflecting mirror structure according to any of the preceding claims, **characterized in that** the triples are arranged in rows.

5. Deflecting mirror structure according to Claim 4, **characterized in that** the triples of adjacent rows have an alignment of the second mirror faces (2) in opposite directions.

6. Deflecting mirror structure according to Claim 4, **characterized in that** the triples of adjacent rows have an alignment of the second mirror faces (2) in the same direction.

7. Deflecting mirror structure according to any of the preceding claims, **characterized in that** it has a light entry side (16) and an optical axis which corresponds to a normal (27) incident on the light entry side (16).

8. Deflecting mirror structure according to any of Claims 1 to 6, **characterized in that** it has a light entry side (16) and an optical axis which deviates from a normal (27) incident on the light entry side (16).

9. Deflecting mirror structure according to any of the preceding claims, **characterized in that** it is made of metal or borosilicate glass.

10. Optical sensor comprising a light transmitter (28) and a light receiver (32), **characterized by** at least one deflecting mirror structure (29) according to any of the preceding claims, by means of which light can be deflected from the light transmitter (28) to the light receiver (32).

11. Optical sensor according to Claim 10, **characterized by** a combined light transmitter and receiver (28) and a retroreflector (32), onto which the light can be deflected by the deflecting mirror structure (29) or deflecting mirror structures and by means of which the light can be reflected back to the light transmitter/receiver (28) via the deflecting mirror structure (29) or deflecting mirror structures (29).

12. Optical sensor according to Claim 10 or 11, **characterized by** a number of deflecting mirror structures (29, 33), the optical axes of which are oriented differently with respect to their normal incident on the light entry side.

13. Use of an optical sensor according to any of Claims 10 to 12 as a light barrier.

14. Use of an optical sensor according to Claim 12 as a smoke alarm.

15. Use of a deflecting mirror structure according to any of Claims 1 to 9 as a road marking.

16. Use of a deflecting mirror structure according to any of Claims 1 to 9 as a sensor for heat, impact, jolting, twisting or deformation.

## Revendications

1. Structure de miroir de déviation comportant une pluralité de triples, la surface de base des triples projetée sur un plan étant un hexagone irrégulier, dans laquelle les triples présentent chacun une première surface réfléchissante (1), une deuxième surface réfléchissante (2) et une troisième surface réfléchissante (3,5) quadrangulaire quelconque, dans laquelle la première (1) et la troisième surfaces réfléchissantes (3, 5) ainsi que la deuxième (2) et la troisième surfaces réfléchissantes (3, 5) sont perpendiculaires et dans laquelle la première (1) et la deuxième (2) surfaces réfléchissantes font entre elles un angle supérieur à 90°, **caractérisée par le fait que** la deuxième (2) surface réfléchissante est rectangulaire et plus grande que la première surface réfléchissante (1).

2. Structure de miroir de déviation selon la revendication 1, **caractérisée par le fait que** la première surface réfléchissante (1) est rectangulaire et que la deuxième surface réfléchissante (2) s'étend plus loin de l'arête commune avec la première surface réfléchissante (1) que la première surface réfléchissante (1).

3. Structure de miroir de déviation selon les revendications 1 et 2, **caractérisée par le fait que** les triples sont formés de microtriples dont la plus petite longueur d'arête est inférieure à 2,1 mm.

4. Structure de miroir de déviation selon l'une des revendications précédentes, **caractérisée par le fait que** les triples sont disposés en rangées.

5. Structure de miroir de déviation selon la revendication 4, **caractérisée par le fait que** les triples de rangées voisines présentent une orientation des deuxièmes surfaces réfléchissantes (2) en direction opposée.

6. Structure de miroir de déviation selon la revendication 4, **caractérisée par le fait que** les triples de rangées voisines présentent une orientation des deuxièmes surfaces réfléchissantes (2) dans la même direction.

7. Structure de miroir de déviation selon l'une des revendications précédentes, **caractérisée par le fait qu'**elle présente une face d'entrée de la lumière (16) ainsi qu'un axe optique qui correspond à une perpendiculaire (27) abaissée sur la face d'entrée de la lumière (16).

8. Structure de miroir de déviation selon l'une des revendications 1 à 6, **caractérisée par le fait qu'**elle présente une face d'entrée de la lumière (16) ainsi qu'un axe optique qui diffère d'une perpendiculaire (27) abaissée sur la face d'entrée de la lumière (16).

9. Structure de miroir de déviation selon l'une des revendications précédentes, **caractérisée par le fait qu'**elle est réalisée en métal ou en verre au borosilicate.

10. Capteur optique comprenant un émetteur de lumière (28) et un récepteur de lumière (32), **caractérisé par** au moins une structure de miroir de déviation (29) selon l'une des revendications précédentes au moyen de laquelle la lumière de l'émetteur de lumière (28) peut être déviée vers le récepteur de lumière (32).

11. Capteur optique selon la revendication 10, **caractérisé par** un émetteur et un récepteur de lumière combinés (28) et un rétroréflecteur (32) sur lequel la lumière peut être déviée par la structure de miroir de déviation (29) ou par les structures de miroir de déviation (29) et au moyen duquel la lumière peut être rétroréfléchie vers l'émetteur/récepteur de lumière (28) par la structure de miroir de déviation (29) ou par les structures de miroir de déviation (29).

12. Capteur optique selon la revendication 10 ou 11, **caractérisé par** plusieurs structures de miroir de déviation (29, 33) dont les axes optiques sont orientés différemment par rapport à leur perpendiculaire abaissée sur la face d'entrée de la lumière.

13. Utilisation d'un capteur optique selon l'une des revendications 10 à 12 comme barrière lumineuse.

14. Utilisation d'un capteur optique selon la revendication 12 comme détecteur de fumée.

15. Utilisation d'une structure de miroir de déviation selon l'une des revendications 1 à 9 comme marquage dans la circulation routière.

16. Utilisation d'une structure de miroir de déviation selon l'une des revendications 1 à 9 comme capteur de chaleur, choc, écrasement, torsion ou déformation.
